# EUROPÄISCHE PATENTSCHRIFT

(11) **EP 0 314 228 B1**
(45) Veröffentlichungstag und Bekanntmachung des Hinweises auf die Patenterteilung: **10.02.1993**
(21) Anmeldenummer: 88202287.4
(22) Anmeldetag: 13.10.1988
(51) Int. Cl.: G06K 7/06

(54) **Abtastgerät für eine Chipkarte**
Chip card reading device
Appareil de lecture pour carte à puce

(30) Priorität: 27.10.1987 AT 2821/87
(43) Veröffentlichungstag der Anmeldung: 03.05.1989
(73) Patentinhaber: Philips Electronics N.V., 5621 BA Eindhoven (NL)
(72) Erfinder: Goldmann, Peter, NL-5656 AA Eindhoven (NL); Habelt, Gerhard, NL-5656 AA Eindhoven (NL); Weihs, Hans, NL-5656 AA Eindhoven (NL)
(74) Vertreter: Cuppens, Hubertus Martinus Maria

(56) Entgegenhaltungen:
- EP-A- 0 198 739
- DE-A- 3 235 654
- PATENT ABSTRACTS OF JAPAN, Band 8, Nr. 14 (P-249)[1451], 21. Januar 1984; & JP-A-58 175 079
- PATENT ABSTRACTS OF JAPAN, Band 10, Nr. 206 (P-478)[2262], 18. Juli 1986; & JP-A-61 48 074
- PATENT ABSTRACTS OF JAPAN, Band 10, Nr. 206 (P-478)[2262], 18. Juli 1986; & JP-A-61 48 075

## Beschreibung

Die Erfindung betrifft ein Abtastgerät für eine Chipkarte, das einen geräteseitig schwenkbar gelagerten, einen Kontaktsatz tragenden Hebelarm aufweist, der zu einer in das Abtastgerät eingeschobenen, dabei eine Betriebslage einnehmenden Chipkarte hin verschwenkbar ist, wobei der Kontaktsatz an der Chipkarte vorgesehene Kontakte kontaktiert. Eine derartige Kontaktierung der Chipkarte ist erforderlich, um die in der Chipkarte enthaltene integrierte Schaltung, die beispielsweise einen oder mehrere Speicher und eine Prozessor enthalten kann, in Betrieb nehmen beziehungsweise auswerten zu können. Solche Chipkarten werden beispielsweise im Bankverkehr, im Handel für Zahlungszwecke, zur Identifikation von zur Ausführung spezieller Handlungen berechtigter Personen und dergleichen verwendet. Bei einem aus der EP-OS 0 235 022 bekannten Abtastgerät der eingangs angeführten Gattung ist zum Verschwenken des den Kontaktsatz tragenden Hebelarmes zur Betriebslage einer Chipkarte hin beziehungsweise von dieser weg eine mit dem Hebelarm zusammenwirkende Nockenscheibe vorgesehen, die über ein Getriebe von einem Motor her antreibbar ist. Durch das Vorsehen einer derartigen Motorsteuerung wird das Abtastgerät in seinem Aufbau aber relativ aufwendig und auch relativ voluminös. Demgebenüber sind auch Abtastgeräte bekannt, bei welchen in Abhängigkeit vom Einschieben einer Chipkarte in dasselbe beziehungsweise Entfernen aus demselben die Kontaktierung der Chipkarte gesteuert wird. So zeigt die DE-OS 36 02 668 ein Abtastgerät, bei dem beim Einschieben einer Chipkarte in dasselbe von der Chipkarte her ein hin-und herbeweglich gelagerter Kartenaufnehmer verstellt wird, wobei ein Kontaktträger mit den Kontakten der Chipkarte in Berührung gebracht wird, und zwar entweder durch ein über Kulissenbahnen gesteuertes Absenken des Kontaktträgers auf die Chipkarte oder durch ein von einer Auflauframpe gesteuertes Anheben des Kontaktbereiches der Chipkarte zum Kontaktträger hin. Hiebei wird die Chipkarte über eine mit dem Kartenaufnehmer zusammenwirkende Rasteinrichtung in ihrer Betriebslage gehalten und durch Lösen der Rasteinrichtung wieder aus ihrer Betriebslage aus dem Abtastgerät herausgeschoben. Bei einer anderen Ausfuhrungsform eines in der DE-PS 29 52 442 angegebenen Abtastgerätes wird beim Einschieben einer Chipkarte in dasselbe von der Chipkarte her ein verschiebbar und versehwenkbar gelagerter Kontaktträger zur Chipkarte hin verstellt, wobei keine separate Entnahmevorrichtung für die Chipkarte aus dem Abtastgerät vorgesehen ist, sondern die Chipkarte von Hand aus aus dem Abtastgerät herausgezogen und dabei der Kontaktträger wieder von der Chipkarte weg verstellt wird. Bei solchen von einer Chipkarte her gesteuerten Kontakteinrichtungen hat sich ergeben, daß es entweder zu Beschädigungen der Chipkarte beziehungsweise des Kontaktträgers kommen kann, wenn beispielsweise von Hand aus eine zu große Kraft auf die Chipkarte ausgeübt wird, oder keine einwandfreie Kontaktierung der Chipkarte erhalten wird, weil der Kontaktträger nicht exakt genug verstellt wird.

Die Erfindung hat sich zum Ziel gesetzt, bei einem Abtastgerät der eingangs angeführten Gattung eine besonders einfache und betriebssichere Handhabung beziehungsweise Bedienung desselben, wozu eine einwandfreie Kontaktgabe des geräteseitigen Kontaktsatzes zu den Kontakten an der Chipkarte gehört, sowie einen einfachen und raumsparenden Aufbau desselben zu erreichen. Erfindungsgemäß ist entsprechend Anspruch 1 hiezu vorgesehen, daß ein parallel zur Einschubrichtung einer Chipkarte in das Abtastgerät verschiebbar geführter Schieber vorgesehen ist, der von einem von Hand aus zu betätigenden eigenen Bedienungsorgan her verschiebbar ist und mit dem den Kontaktsatz tragenden Hebelarm zusammenwirkt, wobei das Verschwenken des den Kontaktsatz tragenden Hebelarmes zur Betriebslage einer Chipkarte hin aufgrund einer Verschiebung des Schiebers erfolgt. Auf diese Weise wird einer Beschädigung der Chipkarte oder des geräteseitigen Kontaktsatzes vorgebeugt, da die Chipkarte einfach, ohne ein Hindernis überwinden zu müssen, in ihre Betriebslage im Abtastgerät einschiebbar ist, wonach dann mittels des eigens vorgesehenen Bedienungsorganes vom Schieber her ihre Kontaktierung mit dem vom schwenkbar angeordneten Hebelarm getragenen Kontaktsatz auf zuverlässige Weise erfolgen kann. Dabei wird außerdem ein sehr einfacher und raumsparender Aufbau des Abtastgerätes erhalten, der es beispielsweise ermöglicht, ein solches Abtastgerät auch als handliches, relativ kleine Abmessungen aufweisendes und insbesondere flach ausgebildetes Taschengerät auszubilden.

Als vorteilhaft hat sich erwiesen, wenn der Schieber, ausgehend von einer Ruhelage, vom Bedienungsorgan her in entgegengesetzten Richtungen in zwei Lagen verschiebbar ist, wobei durch eine Verschiebung des Schiebers aus der Ruhelage in Richtung der Einschubrichtung einer Chipkarte in das Abtastgerät das Verschwenken des den Kontaksatz tragenden Hebelarmes zur Betriebslage einer Chipkarte bewirkbar ist und durch eine Verschiebung des Schiebers aus der Ruhelage in entgegengesetzter Richtung zur Einschubrichtung einer Chipkarte in das Abtastgerät, über einen an ihm vorgesehenen Ansatz, eine sich in ihrer Betriebslage befindende Chipkarte zumindest teilweise aus dem Abtastgerät herausschiebbar ist. Auf diese Weise wird vom eigenen Bedienungsorgan her, über den nunmehr zwei Funktionen ausübenden Schieber, sowohl die Steuerung der Kontaktierung einer sich in ihrer Betriebslage im Abtastgerät befindenden Chipkarte als auch ihr Herausschieben aus ihrer Betriebslage aus dem Abtastgerät bewirkt. Hiebei wird wieder eine sichere Kontaktgabe des geräteseitigen Kontaktsatzes mit den Kontakten an der Chipkarte erreicht, ohne daß dabei eine besondere Belastung der Chipkarte, die zu einer Beschädigung derselben oder des Kontaktsatzes führen könnte, erfolgt, wobei auch beim Herausschieben einer Chipkarte aus ihrer Betriebslage aus dem Abtastgerät keine Beschädigung derselben oder des Kontaktsatzes erfolgen kann, da dies erst dann vom eigenen Bedienungsorgan her bewirkt wird, wenn zuvor der Schieber und der von ihm gesteuerte, den Kontaksatz tragende Hebelarm in seine Ruhelage übergeführt und damit der Kontaktsatz bereits sicher von der Chipkarte weggeschwenkt wurde. Weiters wird auch hier wieder ein einfacher und raumsparender Aufbau des Abtastgerätes erhalten.

Als vorteilhaft hat sich auch erwiesen, wenn zum vom Schieber her erfolgenden Verschwenken des den Kontaktsatz tragenden Hebelarmes zur Betriebslage einer Chipkarte hin ein vom Schieber entgegen der Wirkung einer Feder verschwenkbarer, geräteseitig gelagerter weiterer Hebelarm vorgesehen ist, der seinerseits mit dem den Kontaksatz tragenden Hebelarm zusammenwirkt. Auf diese Weise wird ein sicheres, wenig Kraftaufwand erforderndes Verschwenken des den Kontaktsatz tragenden Hebelarmes zur Betriebslage einer Chipkarte hin und damit eine besonders sichere Kontaktgabe des Kontaksatzes mit den Kontakten an der Chipkarte erreicht. Beispielsweise kann hiezu der weitere Hebelarm einfach an einem am den Kontaktsatz tragenden und unter der Wirkung einer Feder stehenden Hebelarm vorgesehenen Ansatz angreifen.

In diesem Zusammenhang hat sich aber als besonders vorteilhaft erwiesen, wenn der weitere Hebelarm ein gabelförmig ausgebildetes Ende aufweist, mit dem er einen am den Kontaksatz tragenden Hebelarm vorgesehenen Ansatz umfaßt. Auf diese Weise erfolgt eine zwangsweise Mitnahme des den Kontaktsatz tragenden Hebelarmes vom weiteren Hebelarm her, dies sowohl beim Verschwenken des den Kontaktsatz tragenden Hebelarmes zur Betriebslage einer Chipkarte hin als auch von dieser weg, wodurch ein besonders sicheres Verschwenken des den Kontaktsatz tragenden Hebelarmes erreicht wird, ohne daß dabei für sein Verschwenken von der Betriebslage einer Chipkarte weg eine separate, an ihm angreifende Feder sowie ein seinen Verstellweg begrenzender Anschlag vorgesehen werden müssen.

Weiters hat sich als vorteilhaft erwiesen, wenn beim Verschieben des Schiebers zum Verschwenken des den Kontaktsatz tragenden Hebelarmes zur Bettiebslage einer Chipkarte hin ein vom Schieber gesteuerter, federbelasteter Sperriegel freigebbar ist, der bestrebt ist, die Einschubbahn einer Chipkarte in das Abtastgerät im Bereich der Betriebslage einer Chipkarte im Abtastgerät zu sperren. Durch das Vorsehen eines derartigen, ebenfalls vom Schieber her gesteuerten Sperriegels wird erreicht, daß keine Chipkarte in das Abtastgerät eingeschoben werden kann, wenn der den Kontaktsatz tragende Hebelarm zur Betriebslage einer Chipkarte hin verschwenkt ist, wodurch auf sichere weise einer Beschädigung der Chipkarte beziehungsweise des Kontaktsatzes vorgebeugt ist. Weiters wird hiedurch erreicht, daß bei einer sich in der Betrlebslage befindenden Chipkarte beim Verschwenken des den Kontaktsatz tragenden Hebelarmes zu ihr hin gleichzeitig auch der Sperriegel an der Chipkarte zum Anliegen kommt und damit unter der auf ihn einwirkenden Feder auf die Chipkarte drückt, wodurch diese in ihrer Betriebslage zusätzlich zur Wirkung des auf sie drückenden, den Kontaktsatz tragenden Hebelarmes auch durch den auf sie drückenden Sperriegel festgehalten wird, so daß sie mit relativ großer Sicherheit nicht unerwünscht aus dem Abtastgerät herausgleiten kann.

In diesem Zusammenhang hat sich weiters als vorteilhaft erwiesen, wenn zur Steuerung des Sperriegels vom Schieber her ein mit dem Schieber kuppelbarer und mit dem Sperriegel zusammenwirkender, federbelasteter Schleppschieber vorgesehen ist, der vom Schieber bei seiner Verschiebung zum Verschwenken des den Kontaktsatz tragenden Hebelarmes zur Betriebslage einer Chipkarte hin mitnehmbar ist. Auf diese Weise erfolgt eine einwandfreie und sichere Steuerung des Sperriegels vom Schieber her.

Weiters hat sich als vorteilhaft erwiesen, wenn beim Verschieben des Schiebers zum Verschwenken des den Kontaktsatz tragenden Hebelarmes zur Betriebslage einer Chipkarte hin eine Schalteinrichtung vom Schieber her betätigbar ist, welche die elektrischen Funktionen des Abtastgerätes einschaltet. Auf diese Weise kann eine Chipkarte in ihre Betriebslage im Abtastgerät gebracht werden, ohne daß unmittelbar die elektrischen Funktionen des Abtastgerätes eingeschaltet werden, sondern dies erst dann erfolgt, wenn der den Kontaktsatz tragende Hebelarm über das eigene Bedienungsorgan vom Schieber her bewußt zur Betriebslage einer Chipkarte hin verschwenkt wird. Damit erübrigt sich auch ein separater Schalter zum Einschalten der elektrischen Funktionen des Abtastgerätes.

In diesem Zusammenhang hat sich auch als vorteilhaft erwiesen, wenn zur Schalteinrichtung funktionsmäßig ein weiterer Schalter in Serie geschaltet ist, der sich im eingeschalteten Zustand befindet, wenn sich eine Chipkarte in ihrer Betriebslage im Abtastgerät befindet. Auf diese Weise ist erreicht, daß die elektrischen Funktionen des Abtastgerätes tatsächlich nur dann einschaltbar sind, wenn sich eine Chipkarte in ihrer Betriebslage im Abtastgerät befindet und außerdem der den Kontaktsatz tragende Hebelarm zur Betriebslage einer Chipkarte hin verschwenkt ist. Erwähnt sei, daß Schalter, welche eine sich in ihrer Betriebslage im Abtastgerät befindende Chipkarte feststellen und in Abhängigkeit davon bestimmte elektrische Funktionen des Abtastgerätes einschalten, an sich bekannt sind, wobei ein solcher Schalter auch mit der mit den Kontakten an der Chipkarte in Verbindung zu bringenden Kontakteinrichtung des Abtastgerätes kombiniert sein kann, wie dies in der eingangs angeführten DE-OS 36 02 668 angegeben ist.

Weiters hat sich in diesem Zusammenhang als vorteilhaft erwiesen, wenn vom weiteren Schalter zusätzlich eine Anzeigeeinrichtung einschaltbar ist. Hiedurch wird zusätzlich eine Möglichkeit geschaffen, auf optische oder akustische Weise anzuzeigen, ob sich eine Chipkarte in ihrer Betriebslage im Abtastgerät befindet, unabhängig davon, ob die elektrischen Funktionen des Abtastgerätes an sich eingeschaltet sind oder nicht.

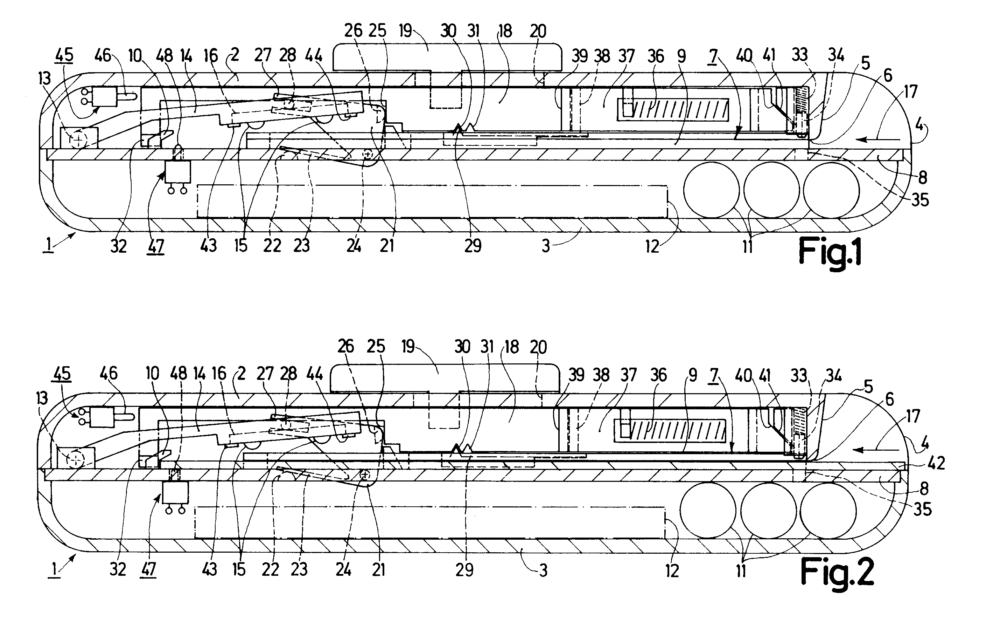

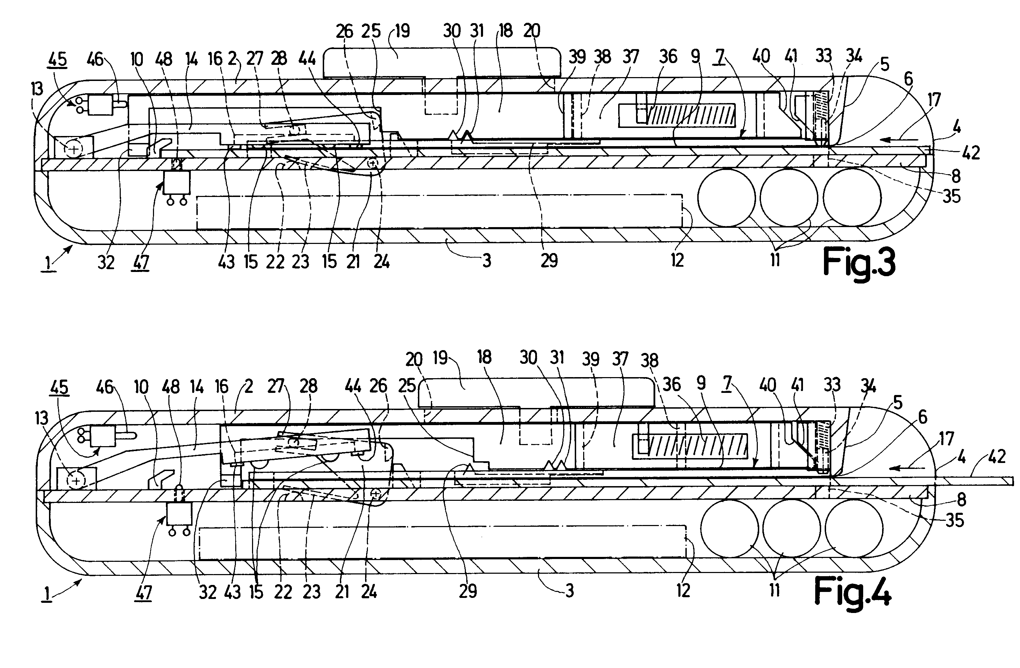

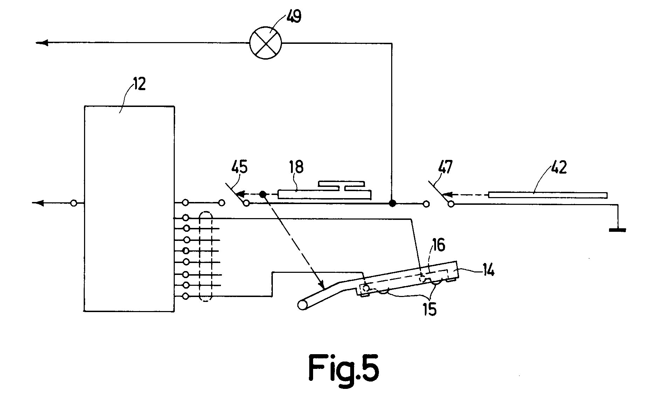

Die Erfindung wird im folgenden anhand der Zeichnungen, in welchen ein Ausführungsbeispiel der Erfindung dargestellt ist, auf das sie jedoch nicht beschränkt sein soll, näher erläutert. Fig.1 zeigt ein Abtastgerät für eine Chipkarte, ohne in dasselbe eingeschobener Chipkarte, wobei der zum Verschwenken eines einen Kontaktsatz zum Kontaktieren der an einer Chipkarte vorgesehenen Kontakte tragenden Hebelarmes vorgesehene, von einem eigenen Bedienungsorgan her verschiebbare Schieber sich in seiner Ruhelage befindet. Fig.2 zeigt das Abtastgerät nach Fig.1 mit in dasselbe eingeschobener Chipkarte. Fig. 3 zeigt das Abtastgerät nach Fig.2, wobei jedoch der den Kontaktsatz tragende Hebelarm mit dem aus seiner Ruhelage in richtung der Einschubrichtung einer Chipkarte in das Abtastgerät verschobenen Schieber zu der sich in ihrer Betriebslage befindenden Chipkarte hin verschwenkt ist. Fig.4 zeigt das Abtastgerät nach Fig.1, wobei eine in dasselbe eingeschobene Chipkarte mit dem aus seiner Ruhelage in entgegengesetzter Richtung zur Einschubrichtung einer Chipkarte in das Abtastgerät verschobenen Schieber teilweise aus ihrer Betriebslage aus dem Abtastgerät herausgeschoben ist. Fig.5 zeigt eine Schaltungsanordnung zum Einschalten der elektrischen Funktionen des Abtastgerätes durch eine vom Schieber des Abtastgerätes her betätigbare Schalteinrichtung in Kombination mit einem von einer Chipkarte her betätigbaren weiteren Schalter.

In Fig.1 ist mit 1 das als relativ flache Box ausgebildete Gehäuse eines Abtastgerätes für eine Chipkarte bezeichnet, welches aus zwei schalenförmigen Gehäusehälften 2 und 3 besteht. Für das Einschieben einer Chipkarte in das Abtastgerät ist beim vorliegenden Ausführungsbeispiel im Bereich einer Schmalseite 4 der Gehäusehälfte 2 eine beispielseiweise über die Breite einer Chipkarte reichende gehäuseseitige Einbuchtung 5 vorgesehen, in deren Bereich sich eine Einschuböffnung 6 zum Einführen einer Chipkarte befindet, an die sich eine Einschubbahn 7 anschließt, die einerseits durch eine Montageplatte 8 zur flächigen Führung einer einzuschiebenden Chipkarte und andererseits zwei seitliche Führungsnuten 9, von welchen in Fig.1 nur eine sichtbar ist, für die Chipkarte begrenzt wird. Entlang dieser Einschubbahn 7 ist eine Chipkarte bis zu einem an der Montageplatte 8 vorgesehenen Anschlag 10 in das Abtastgerät einschiebbar, wodurch ihre Betriebslage im Abtastgerät festgelegt ist. Durch das Vorsehen einer derartigen gehäuseseitigen Einbuchtung 5 ist eine in das Abtastgerät einzuschiebende Chipkarte leicht mit den Fingern bis in ihre Betriebslage im Abtastgerät schiebbar. Eine derartige Einbuchtung 5 ist aber an sich nicht zwingend erforderlich, da eine Chipkarte auch einfach nur mit den Fingerspitzen durch eine unmittelbar im Bereich der Schmalseite 4 der Gehäuseschale 2 angeordnete Einschuböffnung in das Abtastgerät hineingeschoben werden kann, bis sie ihre Betriebslage erreicht. Wie ersichtlich, stehen einer in das Abtastgerät einzuschiebenden Chipkarte bis zum Erreichen ihrer Betriebslage im Abtastgerät keine Hindernisse im Wege, so daß dabei keine Gefahr einer Beschädigung der Chipkarte oder anderer Teile des Abtastgerätes besteht.

In dem zwischen der Gehäuseschale 3 und der Montageplatte 8 befindlichen Raum können beispielsweise Batterien 11 zur Spannungsversorgung des Abtastgerätes und die zum Betrieb des Abtastgerätes erforderlichen, in Fig.1 schematisch angedeuteten, elektronischen Einrichtungen 12 untergebracht werden. In dem sich zwischen der Gehäuseschale 2 und der Montageplatte 8 ergebenden Raum sind im vorliegendem Fall die mechanischen Einrichtungen des Abtastgerätes untergebracht. Bestandteil dieser mechanischen Einrichtungen ist ein mittels eines Zapfens 13 an der Monageplatte 8 zur Betriebslage einer Chipkarte hin schwenkbar gelagerter Hebelarm 14, der einen mehrere federnde Kontaktelemente 15 aufweisenden Kontaktsatz 16 trägt. Bei zur Betriebslage einer Chipkarte hin verschwenktem Hebelarm 14 dienen diese Kontaktelemente 15 zur Kontaktierung der an der Chipkarte vorgesehenen Kontakte, über welche die in der Chipkarte enthaltene integrierte Schaltung in Betrieb nehmbar ist. Um einen einwandfreien Betrieb des Abtastgerätes zu gewährleisten, ist eine sichere Kontaktgabe der Kontaktelemente 15 zu den Kontakten an der Chipkarte von besonderer Bedeutung, was auch ein einwandfreies Verschwenken des den Kontaktsatz 16 tragenden Hebelarmes 14 zur Betriebslage einer Chipkarte hin erforderlich macht. Hiezu ist nun vorgesehen, daß das Verschwenken des Hebelarmes 14 von einem parallel zur durch den Pfeil 17 angegebenen Einschubrichtung einer Chipkarte in das Abtastgerät verschiebbar geführten Schieber 18 her erfolgt, der seinerseits, ausgehend von einer in Fig.1 gezeigten Ruhelage, von einem von Hand aus zu betätigenden eigenen Bedienungsorgan 19 her in zueinander entgegengesetzten Richtungen in zwei weitere Lagen verschiebbar ist. Im vorliegenden Fall ist das Bedienungsorgan 19 als unmittelbar mit dem Schieber 18 beispielsweise durch eine Schnappverbindung gekoppelter und durch einen in der Gehäuseschale 2 vorgesehenen Schlitz 20 hindurchgeführter Schiebeknopf ausgebildet. Beispielsweise wäre es aber auch ohne weiteres möglich, ein solches Bedienungsorgan 19 als Drehknopf auszubilden, von dem her über eine Kulissensteuerung der Schieber 18 aus seiner Ruhelage in entgegengesetzten Richtungen in zwei weitere Lagen verschiebbar ist.

Zum Verschwenken des den Kontaktsatz 16 tragenden Hebelarmes 14 vom Schieber 18 her könnte beispielsweise der Schieber 18 unmittelbar über eine an ihm vorgesehen Auflauframpe mit einem am unter der Wirkung einer Feder stehenden Hebelarm 14 vorgesehenen Ansatz zusammenwirken. Wie beim vorliegenden Ausführungsbeispiel vorgesehen, hat sich jedoch als vorteilhaft erwiesen, wenn ein vom Schieber 18 entgegen der Wirkung einer Feder verschwenkbarer, geräteseitig gelagerter weiterer Hebelarm 21 vorgesehen ist, der seinerseits mit dem den Kontaktsatz 16 tragenden Hebelarm 14 zusammenwirkt, wodurch ein sicheres und wenig Kraftaufwand erforderndes Verschwenken dieses Hebelarmes 14 erreicht wird. Die den weiteren Hebelarm 21 belastende Feder ist im vorliegenden Fall einfach durch einen elastisch federnd ausgebildeten, sich an einem Ansatz 22 an der Monageplatte 8 abstützenden, vom weiteren Hebelarm 21 auskragenden Arm 23 gebildet. Als Lagerstelle für den weiteren Hebelarm 21 dient ein an der Montageplatte 8 vorgesehener Zapfen 24, der in eine entsprechende Ausnehmung am weiteren Hebelarm 21 eingreift. Bei der Verschiebung des Schiebers 18 aus seiner Ruhelage in Richtung der Einschubrichtung einer Chipkarte in das Abtastgerät wird der weitere Hebelarm 21 vom Schieber 18 her dadurch verschwenkt, daß ein am Schieber 18 vorgesehener Vorsprung 25 mit einem am weiteren Hebelarm 21 vorgesehenen Ansatz 26 zusammenwirkt, wodurch der weitere Hebelarm 21 entgegen dem Uhrzeigersinn verschwenkt wird, wie dies in Fig.3 dargestellt ist. Das Zusammenwirken des weiteren Hebelarmes 21 mit dem den Kontaktsatz 16 tragenden Hebelarm 14 erfolgt im vorliegenden Fall dadurch, daß der weitere Hebelarm 21 ein gabelförmig ausgebildetes Ende 27 aufweist, mit dem er einen am den Kontaktsatz 16 tragenden Hebelarm 14 vorgesehenen Ansatz 28 umfaßt. Auf diese Weise erfolgt eine zwangsweise Mitnahme des den Kontaktsatz 16 tragenden Hebelarmes 14 vom weiteren Hebelarm 21 her, dies sowohl beim Verschwenken des Hebelarmes 14 zur Betriebslage einer Chipkarte hin als auch von dieser weg, wodurch ein besonders sicheres Verschwenken des Hebelarmes 14 erreicht wird, ohne daß für sein Verschwenken von der Betriebslage einer Chipkarte weg eine separate, an ihm angreifende Feder sowie ein seinen Verstellweg begrenzender Anschlag vorgesehen werden müssen. In üblicher Weise sind hiebei sowohl die Ruhelage des Schiebers 18 als auch seine weitere Lage, in die er bei seinem Verschieben aus der Ruhelage in Richtung der Einschubrichtung einer Chipkarte in das Abtastgerät verschoben wird und in welcher er den den Kontaktsatz 16 tragenden Hebelarm 14 zur Betriebslage einer Chipkarte hin verschwenkt hält, durch je eine Rast gesichert. Im vorliegenden Fall sind diese Rasten einfach durch eine geräteseitige angeordnete hakenförmige Rastfeder 29 gebildet, welche mit ihrem hakenförmigen Ende in entsprechend den beiden Lagen des Schiebers 18 an ihm angeordnete Ausnehmungen 30 beziehungsweise 31 einfällt. Für die Ausbildung derartiger Rasten stehen im Rahmen des hiefür bekannten Standes der Technik natürlich auch noch andere Möglichkeiten zur Verfügung, wie beispielsweise Kugelrasten und dergleichen. Ebenso könnte im Zuge der zu verstellenden Geräteteile in bekannter Weise durch das Vorsehen abgefederter Zwischenteile für einen im Verstellweg der Geräteteile wirksamen Überhub gesorgt werden, um Toleranzen und dergleichen auszugleichen.

Der Schieber 18 weist ferner an seinem dem Hebelarm 14 zugewandten Ende einen L-förmig abgewinkelten Ansatz 32 auf, der in der Ruhelage des Schiebers 18 mit seinem freien Ende im Bereich des Endes der Einschubbahn 7 einer Chipkarte in das Abtastgerät zu liegen kommt, so daß er sich bei einer in das Abtastgerät eingeschobenen, sich in ihrer Betriebslage befindenden Chipkarte vor deren Vorderkante befindet. Auf diese Weise besteht die Möglichkeit eine sich in ihrer Betriebslage im Abtastgerät befindende Chipkarte durch Verschieben des Schiebers 18 aus seiner Ruhelage in entgegengesetzter Richtung zur Einschubrichtung einer Chipkarte in das Abtastgerät zumindest teilweise aus dem Abtastgerät herauszuschieben, so daß sie leicht von Hand aus erfaßbar und vollständig aus dem Abtastgerät herausziehbar ist, wie dies noch im folgenden anhand der Fig.4 erläutert wird.

Weiters weist das Abtastgerät einen durch eine sich geräteseitig abstützende Feder 33 belasteten Sperriegel 34 für die Einschubbahn 7 einer Chipkarte in das Abtastgerät auf, der ebenfalls vom Schieber 18 her steuerbar ist. Hiebei wird beim Verschieben des Schiebers 18 aus seiner Ruhelage in Richtung der Einschubrichtung einer Chipkarte in das Abtastgerät der Sperriegel 34 vom Schieber 18 her freigegeben, wodurch der Sperriegel 34 unter der auf ihn einwirkenden Feder 33 bestrebt ist, die Einschubbahn 7 einer Chipkarte in das Abtastgerät im Bereich der Betriebslage einer Chipkarte im Abtastgerät zu sperren, wozu korrespondierend zur Lage des Sperriegels 34 in der Montageplatte 8 eine Ausnehmung 35 vorgesehen ist, in welche der Sperriegel 34 eingreifen kann. Zweckmäßigerweise wird die Lage des Sperriegels 34 dabei möglichst am Beginn der Einschubbahn 7 einer Chipkarte in das Abtastgerät gewählt, damit ein unerwünschtes Einschieben einer Chipkarte in das Abtastgerät möglichst frühzeitig unterbunden wird. Ist bereits eine Chipkarte in ihre Betriebslage im Abtastgerät eingeschoben und wird dann erst der Sperriegel 34 vom Schieber 18 her freigegeben, so kommt der Sperriegel 34, da er im Bereich der Betriebslage einer Chipkarte im Abtastgerät wirksam ist, an der Chipkarte selbst zum Anliegen und drückt diese dabei gegen die Montageplatte 8, ebenso wie dies vom den Kontaktsatz 16 tragenden Hebelarm 14 her erfolgt. Auf diese Weise wird einem ungewollten Herausgleiten der Chipkarte aus ihrer Betriebslage im Abtastgerät entgegengewirkt.

Im vorliegenden Fall ist zur Steuerung des Sperriegels 34 vom Schieber 18 her ein ebenfalls parallel zur Einschubrichtung einer Chipkarte in das Abtastgerät verschiebbar geführter, unter der Wirkung einer sich geräteseitig abstützenden Feder 36 stehender Schleppschieber 37 vorgesehen. Das Zusammenwirken des Schiebers 18 mit diesem Schleppschieber 37 erfolgt dadurch, daß ein am dem Schleppschieber 37 zugewandten Ende des Schiebers 18 vorgesehener Ansatz 38 einen am dem Schieber 18 zugewandten Ende des Schleppschiebers 37 vorgesehenen korrespondierenden Ansatz 39 hintergreift. Mit dem vom Schieber 18 abgewandten Ende wirkt der Schleppschieber 37 über eine an ihm vorgesehen Steuerfläche 40 mit einer am Sperriegel 34 vorgesehenen korrespondierenden Steuerfläche 41 zusammen. Auf diese Weise wird der Schleppschieber 37 vom Schieber 18 bei seiner Verschiebung aus der Ruhelage in Richtung der Einschubrichtung einer Chipkarte in das Abtastgerät zufolge des Zusammenwirkens der Ansätze 38 und 39 mitgenommen, wodurch die am Schleppschieber 37 vorgesehene Steuerfläche 40 über die am Sperriegel 34 vorgesehene Steuerfläche 41 den Sperriegel 34 zu seiner Verstellung in Richtung zur Einschubbahn 7 einer Chipkarte in das Abtastgerät freigibt, wie dies Fig.3 zeigt. Wird hingegen der Schieber 18 aus seiner Ruhelage in entgegengesetzter Richtung zur Einschubrichtung einer Chipkarte in das Abtastgerät verschoben, so wird von ihm der Schleppschieber 37 nicht mitgenommen, da es dabei zu keinem Zusammenwirken der Ansätze 38 und 39 kommt, wodurch der Sperriegel 34 in seiner Freigabelage für die Einschubbahn 7 einer Chipkarte in das Abtastgerät verbleibt, wie dies Fig.4 zeigt. Auf diese Weise erfolgt eine einwandfreie und sichere Steuerung des Sperriegels 34 vom Schieber 18 her.An sich wäre es aber auch ohne weiteres möglich, daß der Sperrriegel 34 vom Schieber 18 her unmittelbar oder über andere Steuerelemente, wie beispielsweise einen Steuerhebel, gesteuert wird.

Wie ersichtlich, ermöglichen die im vorstehenden beschriebenen mechanischen Einrichtungen des Abtastgerätes einen einfachen und raumsparenden Aufbau desselben, der es insbesondere gestattet, das Abtastgerät in seinen äußeren Abmessungen klein und flach, also besonders handlich zu gestalten, so daß es beispielsweise auch als Taschengerät ausgebildet werden kann.

Wird nun in ein wie in Fig.1 dargestelltes Abtastgerät eine Chipkarte 42 in Richtung des Pfeiles 17 durch die an der Gehäuseschale 2 vorgesehene Einschuböffnung 6 entlang der Einschubbahn 7 eingeschoben, so erreicht sie, ohne ein Hindernis überwinden zu müssen, ihre Betriebslage im Abtastgerät, wobei dann ihre Vorderkante am an der Montageplatte 8 vorgesehenen Anschlag 10 zur Anlage kommt, wie dies Fig.2 zeigt. Soll danach das Abtastgerät in Betrieb genommen werden, so wird mit dem Bedienungsorgan 19 der Schieber 18 aus seiner Ruhelage in Richtung der Einschubrichtung einer Chipkarte 42 in das Abtastgerät verschoben, wodurch über den an ihm vorgesehenen Vorsprung 25, welcher mit dem am weiteren Hebelarm 21 vorgesehenen Ansatz 26 zusammenwirkt, der weitere Hebelarm 21 entgegen dem Uhrzeigersinn verschwenkt wird, wobei dann dieser über sein gabelförmig ausgebildetes Ende 27, das mit dem am den Kontaktsatz 16 tragenden Hebelarm 14 vorgesehenen Ansatz 28 zusammenwirkt, den Hebelarm 14 seinerseits im Uhrzeigersinn verschwenkt, bis er mit an ihm vorgesehenen Ansätzen 43 und 44 an der Chipkarte 42 zum Anliegen kommt, wie dies Fig.3 zeigt. In dieser Lage sind die verstellten Geräteteile durch die am Schieber 18 angreifende und dabei in seine Ausnehmung 31 eingefallene Rastfeder 29 gesichert. Mittels der federnden Kontaktelemente 15 werden dabei die an der Chipkarte 42 vorgesehenen Kontakte kontaktiert. Bei dieser Verschiebung des Schiebers 18 wurde der Schleppschieber 37 vom Schieber 18 her mitgenommen und dadurch ebenfalls in richtung der Einschubrichtung einer Chipkarte 42 in das Abtastgerät verstellt, wodurch er seinerseits den Sperrriegel 34 freigegeben hat, der dabei an der Chipkarte 42 zum Anliegen gekommen ist und diese unter der Wirkung der Feder 33 gegen die Montageplatte 8 drückt. In dieser Lage des Schiebers 18 wird somit die Chipkarte 42 durch die auf sie drückenden Ansätzte 43 und 44 und Kontaktelemente 15 vom Hebelarm 14 und zusätzlich vom Sperriegel 34 her in ihrer Betriebslage im Abtastgerät festgehalten, so daß sie nicht ungewollt aus diesem herausgleiten kann.

Weiters weist das Abtastgerät noch eine Schalteinrichtung 45 auf, deren Betätigungsorgan 46 im Verschiebeweg des Schiebers 18 aus seiner Ruhelage in Richtung der Einschubrichtung einer Chipkarte 42 in das Abtastgerät liegt, wodurch die Schalteinrichtung 45 bei der Überführung des Schiebers 18 in die Lage, in welcher er den den Kontaktsatz 16 tragenden Hebelarm 14 zur Betriebslage einer Chipkarte 42 hin verschwenkt hält, betätigt wird. Beim vorliegenden Ausführungsbeispiel ist noch ein weiterer Schalter 47 vorgesehen, dessen Betätigungsorgan 48 in die Einschubbahn 7 einer Chipkarte 42 in das Abtastgerät reicht, wodurch dieser Schalter 47 beim Einschieben einer Chipkarte 42 in das Abtastgerät betätigt wird. Wie aus dem in Fig.5 angegebenen Schaltbild ersichtlich ist, liegen die Schalteinrichtung 45 und der weitere Schalter 47 funktionsmäßig in Serie zu der elektronischen Einrichtung 12 des Abtastgerätes, wodurch die elektrischen Funktionen des Abtastgerätes bei gleichzeitiger Betätigung der Schalteinrichtung 45 und des weiteren Schalters 47 eingeschaltet werden, was dann der Fall ist, wenn sich eine Chipkarte 42 in ihrer Betriebslage im Abtastgerät befindet und der Kontaktsatz 16 zu ihr hin verschwenkt ist. Auf diese Weise sind die elektrischen Funktionen des Abtastgerätes nur dann einschaltbar, wenn sich eine Chipkarte 42 in ihrer Betriebslage im Abtastgerät befindet, was im vorliegenden Fall außerdem durch eine, beispielsweise durch eine Glühlampe gebildete Signaleinrichtung 49 angezeigt wird, die an den Verbindungspunkt der Schalteinrichtung 45 und des weiteren Schalters 47 angeschlossen ist.

Für den Fall, daß keine Chipkarte 42 in das Abtastgerät eingeschoben ist und doch vom Bedienungsorgan 19 her der Schieber 18 aus seiner Ruhelage in Richtung der Einschubrichtung einer Chipkarte 42 in das Abtastgerät verschoben und dabei der den Kontaktsatz 16 tragende Hebelarm 14 zur Betriebslage einer Chipkarte 42 hin verschwenkt wird, wird vom Schieber 18 her der Schleppschieber 37 mitgenommen und dadurch der Sperriegel 34 freigegeben, der nunmehr in die in der Montageplatte 8 vorgesehene Ausnehmung 35 einfällt. Hiedurch wird die Einschubbahn 7 einer Chipkarte 42 in das Abtastgerät gesperrt und damit verhindert, daß eine Chipkarte 42 in dasselbe eingeschoben werden kann, wenn sich der den Kontaktsatz 16 tragende Hebelarm 14 in seiner zur Betriebslage einer Chipkarte 42 hin verschwenkten Lage befindet, wodurch sowohl einer Beschädigung einer Chipkarte 42 als auch des Kontaktsatzes 16 vorgebeugt ist, wobei außerdem die elektrischen Funktionen des Abtastgerätes nicht einschaltbar sind, da in einem solchen Fall der weitere Schalter 47 geöffnet ist.

Die elektrischen Funktionen des Abtastgerätes sind bei einer sich in ihrer Betriebslage befindenden Chipkarte 42 und zu ihr hin verschwenktem, den Kontaktsatz 16 tragenden Hebelarm 14 dadurch wieder ausschaltbar, daß der Schieber 18 entgegen der Richtung der Einschubrichtung einer Chipkarte 42 in das Abtastgerät in seine Ruhelage zurückverschoben wird, wobei dann die Schalteinrichtung 45 geöffnet und der den Kontaktsatz 16 tragende Hebelarm 14 vom weiteren hebelarm 21 her, zufolge der federnden Wirkung seines Armes 23, von der Betriebslage der Chipkarte 42 weggeschwenkt wird. Hiebei wird auch der Sperriegel 34 vom unter der Wirkung der Feder 36 stehenden Schleppschieber 37 her, der seinerseits vom Schieber 18 freigegeben wird, in seine Freigabelage übergeführt. Sobald der Schieber 18 seine wie in Fig.1 gezeigte Ruhelage erreicht hat, könnte die sich in ihrer Betriebslage befindende Chipkarte 42 an sich ungehindert von Hand aus aus dem Abtastgerät herausgezogen werden, dadurch, daß im Bereich der gehäuseseitigen Einbuchtung 5 mit den Fingern auf sie gedrückt und sie dabei in entgegengesetzter Richtung zur Einschubrichtung entlang der Montageplatte 8 verschoben wird. Als bedienungsfreundlicher hat sich jedoch erwiesen, wenn die Chipkarte 42, wie beim vorliegenden Ausführungsbeispiel vorgesehen, vom Schieber 18 her zumindest teilweise aus dem Abtastgerät herausschiebbar ist, so daß sie dann von Hand aus beidseitig erfaßt und leicht aus dem Abtastgerät herausgezogen werden kann. Hiezu wird der Schieber 18 mittels des Bedienungsorganes 19 in entgegengesetzter Richtung zur Einschubrichtung einer Chipkarte 42 in das Abtastgerät aus seiner Ruhelage heraus verschoben, wobei dann der an ihm vorgesehene, vor der Vorderkante der sich in ihrer Betriebslage befindenden Chipkarte 42 liegende Ansatz 32 die Chipkarte 42 mitnimmt und entlang der Einschubbahn 7 aus dem Abtastgerät herausschiebt, bis sie aus dem Gehäuse 1 des Abtastgerätes zumindest teilweise herausragt. Bei einer solchen Verschiebung des Schiebers 18 wird von diesem der Schleppschieber 37 nicht mitgenommen, wodurch der Sperriegel 34 weiterhin in seiner Freigabelage gehalten und damit das Herausschieben einer Chipkarte 42 aus dem Abtastgerät nicht behindert wird.

Wie aus dem vorstehenden ersichtlich, besteht eine Reihe von Abwandlungsmöglichkeiten für das beschriebene Ausführungsbeispiel, ohne daß dabei der Rahmen der Erfindung verlassen wird. Dies gilt insbesondere im Zusammenhang mit der Art und Weise, wie vom Schieber 18 her die verschiedenen Funktionsabläufe gesteuert werden und insbesondere wie von ihm her der den Kontaktsatz 16 tragende Hebelarm 14 zur Betriebslage einer Chipkarte 42 hin beziehungsweise von dieser weg verschwenkt wird und auch auf welche Art und Weise der Schieber 18 selbst vom Bedienungsorgan 19 her verschoben wird. Eine einwandfreie Betriebsweise des Abtastgerätes wird dabei dadurch gewährleistet, daß die Kontaktierung einer sich in ihrer Betriebslage befindenden Chipkarte, ohne einer Gefahr ihrer Beschädigung oder der Beschädigung der Kontakteinrichtung selbst, in zuverlässiger Weise erfolgt. Weiters wird durch die vorgesehenen Maßnahmen eine einfache und sichere Bedienung des Abtastgerätes und ein einfacher und raumsparender Aufbau desselben erreicht.

## Patentansprüche

1. Abtastgerät für eine Chipkarte (42), das einen geräteseitig schwenkbar gelagerten, einen Kontaktsatz (16) tragenden Hebelarm (14) aufweist, der zu einer in das Abtastgerät eingeschobenen, dabei eine Betriebslage einnehmenden Chipkarte (42) hin verschwenkbar ist, wobei der Kontaktsatz (16) an der Chipkarte (42) vorgesehene Kontakte kontaktiert, dadurch gekennzeichnet, daß ein parallel zur Einschubrichtung einer Chipkarte (42) in das Abtastgerät verschiebbar geführter Schieber (18) vorgesehen ist, der von einem von Hand aus zu betätigenden eigenen Bedienungsorgan (19) her verschiebbar ist und mit dem den Kontaktsatz (16) tragenden Hebelarm (14) zusammenwirkt, wobei der Schieber (18) mit dem Hebelarm (14) so gekoppelt ist, daß das Verschwenken des den Kontakstatz (16) tragenden Hebelarmes (14) zur Betriebslage einer Chipkarte (42) hin aufgrund einer Verschiebung des Schiebers (18) erfolgt.

2. Abtastgerät nach Anspruch 1, dadurch gekennzeichnet, daß der Schieber (18), ausgehend von einer Ruhelage, vom Bedienungsorgan (19) her in entgegengesetzten Richtungen in zwei Lagen verschiebbar ist, wobei durch eine Verschiebung des Schiebers (18) aus der Ruhelage in Richtung der Einschubrichtung einer Chipkarte (42) in das Abtastgerät das Verschwenken des den Kontaktsatz (16) tragenden Hebelarmes (14) zur Betriebslage einer Chipkarte (42) bewirkbar ist und durch eine Verschiebung des Schiebers (18) aus der Ruhelage in entgegengesetzter Richtung zur Einschubrichtung einer Chipkarte (42) in das Abtastgerät, über einen an ihm vorgesehenen Ansatz (32), eine sich in ihrer Betriebslage befindende Chipkarte (42) zumindest teilweise aus dem Abtastgerät herausschiebbar ist.

3. Abtastgerät nach Anspruch 1 oder 2, dadurch gekennzeichnet, daß zum vom Schieber (18) her erfolgenden Verschwenken des den Kontaktsatz (16) tragenden Hebelarmes (14) zur Betriebslage einer Chipkarte (42) hin ein vom Schieber (18) entgegen der Wirkung einer Feder (23) verschwenkbarer, geräteseitig gelagerter weiterer Hebelarm (21) vorgesehen ist, der seinerseits mit dem den Kontaktsatz (16) tragenden Hebelarm (14) zusammenwirkt.

4. Abtastgerät nach Anspruch 3, dadurch gekennzeichnet, daß der weitere Hebelarm (21) ein gabelförmig ausgebildetes Ende (27) aufweist, mit dem er einen an dem den Kontaktsatz (16) tragenden Hebelarm (14) vorgesehenen Ansatz (28) umfaßt.

5. Abtastgerät nach einem der vorhergehenden Ansprüche, dadurch gekennzeichnet, daß beim Verschieben des Schiebers (18) zum Verschwenken des den Kontaktsatz (16) tragenden Hebelarmes (14) zur Betriebslage einer Chipkarte (42) hin ein vom Schieber (18) gesteuerter, federbelasteter Sperriegel (34) freigebbar ist, der bestrebt ist, die Einschubbahn (7) einer Chipkarte (42) in das Abtastgerät im Bereich der Betriebslage einer Chipkarte (42) im Abtastgerät zu sperren.

6. Abtastgerät nach Anspruch 5, dadurch gekennzeichnet, daß zur Steuerung des Sperriegels (34) vom Schieber (18) her ein mit dem Schieber (18) kuppelbarer und mit dem Sperriegel (34) zusammenwirkender, federbelasteter Schleppschieber (37) vorgesehen ist, der vom Schieber (18) bei seiner Verschiebung zum Verschwenken des den Kontaktsatz (16) tragenden Hebelarmes (14) zur Betriebslage einer Chipkarte (42) hin mitnehmbar ist.

7. Abtastgerät nach einem der vorhergehenden Ansprüche, dadurch gekennzeichnet, daß beim Verschieben des Schiebers (18) zum Verschwenken des den Kontaktsatz (16) tragenden Hebelarmes (14) zur Betriebslage einer Chipkarte (42) hin eine Schalteinrichtung (45) vom Schieber (18) her betätigbar ist, welche die elektrischen Funktionen des Abtastgerätes einschaltet.

8. Abtastgerät nach Anspruch 7, dadurch gekennzeichnet, daß zur Schalteinrichtung (45) funktionsmäßig ein weiterer Schalter (47) in Serie geschaltet ist, der sich im eingeschalteten Zustand befindet, wenn sich eine Chipkarte (42) in ihrer Betriebslage im Abtastgerät befindet.

9. Abtastgerät nach Anspruch 8, dadurch gekennzeichnet, daß vom weiteren Schalter (47) zusätzlich eine Anzeigeeinrichtung (49) einschaltbar ist.

## Claims

1. A reading device for a chip card (42), which device comprises a lever arm (14) which is pivotably supported on the device and which carries a contact set (16), which lever arm can be pivoted towards a chip card (42) inserted into and occupying an operating position in the reading device, upon which the contact set (16) engages with contacts provided on the chip card (42), characterised in that there is provided a slide (18) which is guided so as to be movable parallel to the direction of insertion of a chip card (42) into the reading device, which slide can be moved by means of a separate hand-operated actuating member (19) and cooperates with the lever arm (14) carrying the contact set (16), the slide (18) being coupled to the lever arm (14) in such a manner that the lever arm (14) carrying the contact set (16) is pivoted towards the operating position of a chip card (42) as a result of a movement of the slide (18).

2. A reading device as claimed in Claim 1, characterised in that by means of the actuating member (19) the slide (18) can be moved in opposite directions from a rest position to two further positions, a movement of the slide (18) out of the rest position in the direction of insertion of a chip card (42) into the reading device enabling the lever arm (14) carrying the contact set (16) to be pivoted towards the operating position of a chip card (42), and a movement of the slide (18) out of the rest position in a direction opposite to the direction of insertion of a chip card (42) into the reading device enabling a chip card (42) which is in its operating position to be moved at least partly out of the reading device via a projection (32) provided on said slide.

3. A reading device as claimed in Claim 1 or 2, characterised in that for pivoting the lever arm (14) carrying the contact set (16) towards the operating position of a chip card (42) by means of the slide (18) there is provided a further lever arm (21) which can be pivoted by the slide (18) against the action of a spring (23) and which is supported on the device, which further lever arm cooperates with the lever arm (14) carrying the contact set (16).

4. A reading device as claimed in Claim 3, characterised in that the further lever arm (21) has a bifurcate end portion with which it engages around a projection (28) provided on the lever arm (14) carrying the contact set (16).

5. A reading device as claimed in any one of the preceding Claims, characterised in that a spring-loaded blocking member (34), which is controlled by the slide (18), can be released when the slide (18) is moved to pivot the lever arm (14) carrying the contact set (16) towards the operating position of a chip card (42), which blocking member tends to block, at the location of the operating position of a chip card (42) in the reading device, the path (7) of insertion of a chip card (42) into the reading device.

6. A reading device as claimed in Claim 5, characterised in that for controlling the blocking member (34) by means of the slide (18) there is provided a spring-loaded traction slide (37) which can be coupled to the slide (18) and which cooperates with the blocking member (34), which traction slide can be moved along by the slide (18) when said slide (18) is moved to pivot the lever arm (14) carrying the contact set (16) towards the operating position of a chip card (42).

7. A reading device as claimed in any one of the preceding Claims, characterised in that upon a movement of the slide (18) to pivot the lever arm (14) carrying the contact set (16) towards the operating position of a chip card (42) a switching means (45) can be actuated by means of the slide (18), which switching means activates the electrical functions of the reading device.

8. A reading device as claimed in Claim 7, characterised in that the switching means (45) is functionally arranged in series with a further switch (47), which is in the on-state when a chip card (42) is in its operating position in the reading device.

9. A reading device as claimed in Claim 8, characterised in that the further switch (47) can also activate an indicator means (49).

## Revendications

1. Appareil de lecture pour une carte à puce (42), comportant un bras de levier (14) portant un jeu de contacts (16) et monté à pivotement du côté de l'appareil, qui peut pivoter en direction d'une carte à puce (42) insérée dans l'appareil de lecture et occupant ainsi une position de fonctionnement dans laquelle le jeu de contacts (16) vient en contact avec des contacts prévus sur la carte à puce (42), caractérisé en ce qu'est prévu un coulisseau (18) guidé à coulissement parallèlement à la direction d'introduction d'une carte à puce (42) dans l'appareil de lecture, qui peut être déplacé par un organe de manoeuvre (19) qui lui est propre, à actionner à la main, et avec lequel coopère le bras de levier (14) portant le jeu de contacts (16), le coulisseau (18) étant couplé au bras de levier (14) de telle sorte que le pivotement du bras de levier (14) portant le jeu de contacts (16) vers la position de travail d'une carte à puce (42) s'effectue en vertu d'un déplacement du coulisseau (18).

2. Appareil de lecture suivant la revendication 1, caractérisé en ce que le coulisseau (18) au départ d'une position de repos, peut être déplacé par l'organe de manoeuvre (19) en sens opposés dans deux positions, de sorte que, par un déplacement du coulisseau (18) à partir de la position de repos dans le sens d'introduction de la carte à puce (42) dans l'appareil de lecture, le pivotement du bras de levier (14) portant le jeu de contacts (16) vers la position de repos d'une carte à puce (42) peut être effectué et que, par un déplacement du coulisseau (18) à partir de la position de repos dans le sens opposé au sens d'introduction d'une carte à puce (42) dans l'appareil de lecture, par l'intermédiaire d'une saillie (32) prévue sur ce coulisseau, une carte à puce (42) se trouvant dans sa position de travail peut être éjectée au moins partiellement de l'appareil de lecture.

3. Appareil de lecture suivant la revendication 1 ou 2, caractérisé en ce que pour le pivotement du bras de levier (14) portant le jeu de contacts (16) vers la position de travail d'une carte à puce (42) à l'intervention du coulisseau (18), un autre bras de levier (14) monté sur l'appareil, pouvant pivoter à l'encontre de la sollicitation d'un ressort (23), qui coopère, pour sa part, avec le bras de levier (21) portant le jeu de contacts (16), est prévu.

4. Appareil de lecture suivant la revendication 3, caractérisé en ce que l'autre bras de levier (21) présente une extrémité en forme de fourche (27) par laquelle il enserre une saillie (28) prévue sur le bras de levier (14) portant le jeu de contacts (16).

5. Appareil de lecture suivant l'une quelconque des revendications précédentes, caractérisé en ce que lors du déplacement du coulisseau (18) pour faire pivoter le bras de levier (14) portant le jeu de contacts (16) vers la position de travail d'une carte à puce (42), un verrou d'arrêt (34) à ressort commandé par le coulisseau (18) qui est prévu pour bloquer le trajet d'insertion (7) d'une carte à puce (42) dans l'appareil de lecture dans le domaine de la position de travail d'une carte à puce (42) dans l'appareil de lecture, peut être libéré.

6. Appareil de lecture suivant la revendication 5, caractérisé en ce que pour la commande du verrou (34) par le coulisseau (18), est prévu un coulisseau (37) traîné sollicité par ressort pouvant être accouplé au coulisseau (18) et coopérant avec le verrou (34), qui peut être entraîné par le coulisseau (18) lors de son déplacement pour le pivotement du bras de levier (14) portant le jeu de contacts (16) vers la position de travail d'une carte à puce (42).

7. Appareil de lecture suivant l'une quelconque des revendications précédentes, caractérisé en ce que lors du coulissement du coulisseau (18) pour le pivotement du bras de levier (14) portant le jeu de contacts (16) vers la position de travail d'une carte à puce (42), un dispositif de commutation (45) qui enclenche les fonctions électriques de l'appareil de lecture peut être actionné par le coulisseau (18).

8. Appareil de lecture suivant la revendication 7, caractérisé en ce qu'un autre commutateur (47) qui est dans l'état enclenché lorsqu'une carte à puce (42) se trouve dans sa position de travail dans l'appareil de lecture est monté fonctionnellement en série avec le dispositif de commutation (45).

9. Appareil de lecture suivant la revendication 8, caractérisé en ce qu'un dispositif indicateur (49) peut, en outre, être enclenché par l'autre commutateur (47).
